Europäisches Patentamt

European Patent Office

Office européen des brevets

(11) Veröffentlichungsnummer: **0 441 306 A2**

## EUROPÄISCHE PATENTANMELDUNG

(21) Anmeldenummer: **91101488.4**

(22) Anmeldetag: **05.02.91**

(51) Int. Cl.5: **A47B 47/02**

(30) Priorität: **09.02.90 DE 9001478 U**

(43) Veröffentlichungstag der Anmeldung:
**14.08.91 Patentblatt 91/33**

(84) Benannte Vertragsstaaten:
**BE CH DE ES FR GB IT LI NL**

(71) Anmelder: **DYES GMBH BÜROMÖBELWERK**
**Am Deisterbahnhof 6**
**W-3252 Bad Münder 1(DE)**

(72) Erfinder: **Uredat, Claus**
**Vösseberge 18**
**W-4592 Lindern(DE)**
Erfinder: **Ritter, Wolfgang**
**Feuerbacher Weg 14**
**W-7000 Stuttgart 1(DE)**

(74) Vertreter: **Raible, Hans, Dipl.-Ing.**
**Schoderstrasse 10**
**W-7000 Stuttgart 1(DE)**

(54) Regalanordnung.

(57) Eine Regalanordnung hat senkrechte Stützen, die durch horizontale, parallele Rohre (15) miteinander verbunden sind. Auf diesen Rohren (15) ist mindestens ein Formstück (21) angeordnet. Es hat zwei Formhöhlungen (37, 38), die die Rohre (15) von oben her bereichsweise umschließen. Seine Oberseite (25) ist zur Auflage eines Schrankelements (18) oder dergleichen ausgebildet.

Fig.2

## REGALANORDNUNG

Die Erfindung betrifft eine Regalanordnung mit senkrechten Stützanordnungen, welche durch in gleicher Höhe befindliche parallele Rohre verbunden sind

Bei derartigen Regalanordnungen sind die senkrechten Stützanordnungen durch parallele Rohre verbunden, wobei sich z.B. im unteren Bereich eines Regals zwei parallele Rohre auf gleicher Höhe zwischen zwei Stützanordnungen erstrecken. Auf diesen parallelen Rohren werden dann Regalelemente angebracht, z.B. ein Schranksegment.

Eine Aufgabe der Erfindung wird darin gesehen, hier eine Verbesserung zu schaffen.

Erfindungsgemäß wird diese Aufgabe gelöst durch die im Anspruch 1 angegebenen Maßnahmen. Dadurch, daß das Formstück mit seinen Formhöhlungen die Rohre von oben her umschließt, entsteht eine formschlüssige Verbindung mit diesen, so daß das Formstück ohne Spiel mit den Rohren verbunden ist und seinerseits als feste Auflage beispielsweise für ein Schranksegment dienen kann. Man vermeidet so, daß das Schranksegment auf den Rohren klappert und kann diese auch stärker belasten, da die Kräfte vom Schranksegment oder dergleichen gleichmäßiger auf die Rohre übertragen werden.

Mit besonderem Vorteil wird dabei die Regalanordnung so ausgebildet, daß sich die Formhöhlungen auf den einander zugewandten Seiten der Rohre bis unter deren Mittelebenen erstrecken. Hierdurch wird eine besonders gute, formschlüssige Verbindung erreicht, besonders dann, wenn die Formhöhlungen an ihren sich unter die Mittelebene der Rohre erstreckenden Stellen einen Abstand voneinander aufweisen, welcher größer ist als der Abstand der Rohre im Bereich ihrer Mittelebenen. In diesem Fall rastet das Formstück auf den Rohren ein, d.h. es tritt eine Klemmwirkung ein.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1 eine raumbildliche Darstellung einer erfindungsgemäßen Regalanordnung mit zwei darauf befestigten Formstücken und einem auf den Formstücken abgestützten, gestrichelt angedeuteten Schranksegment,

Fig. 2 eine Seitenansicht eines Formstücks und eines darauf angeordneten Elements, wobei das Formstück auf zwei parallelen Rohren formschlüssig befestigt ist,

Fig. 3 eine Draufsicht auf das Formstück, gesehen längs der Linie III-III der Fig. 2,

Fig. 4 einen Schnitt durch das Formstück, gesehen längs der Linie IV-IV der Fig. 2,

Fig. 5 eine raumbildliche Darstellung eines Teils eines Formstücks, und

Fig. 6 eine Darstellung analog Fig. 1, wobei auf den Formstücken gestrichelt angedeutete Regalbretter angeordnet sind.

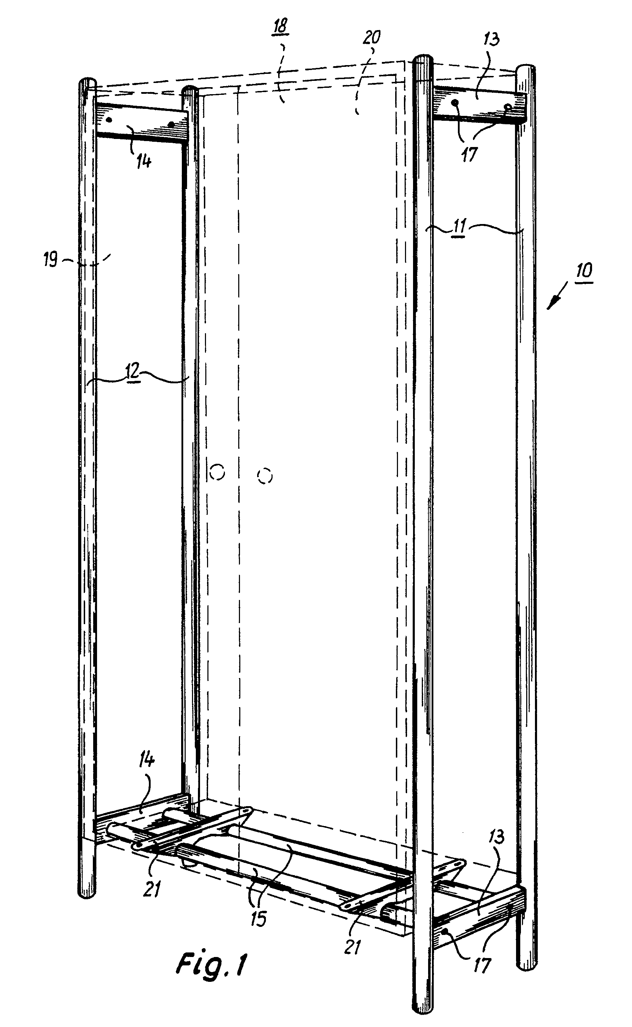

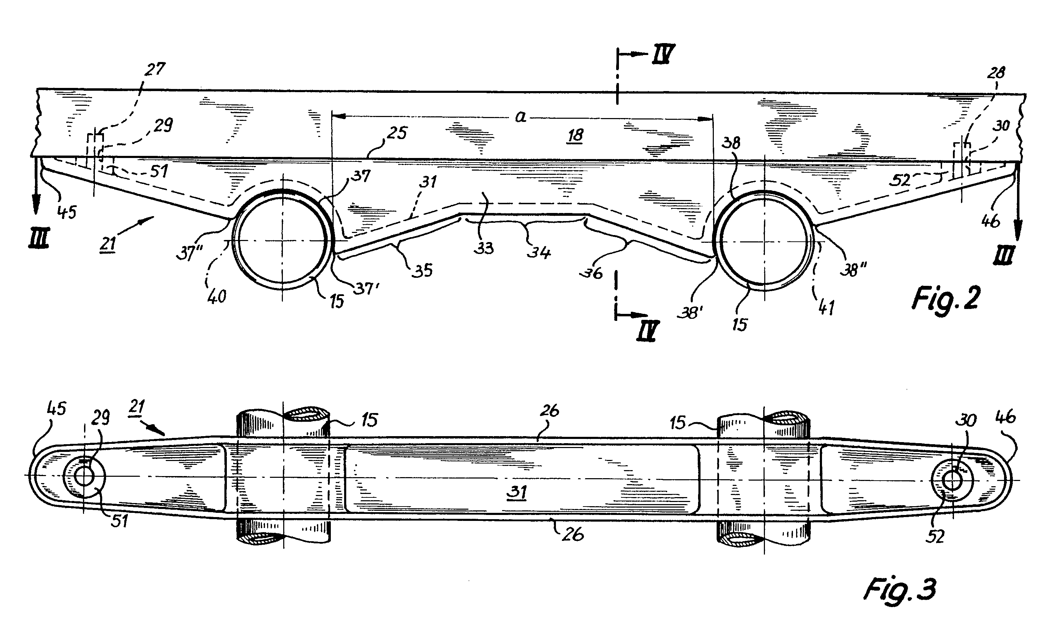

Fig. 1 zeigt schematisch eine Regalanordnung 10 mit zwei senkrechten Stützanordnungen 11 und 12, die auch als Leitern bezeichnet werden könnten und die Querverstrebungen 13 bzw. 14 haben, an denen mittels Schrauben 17 parallele Rohre 15 befestigt sind. Auf diesen Rohren sind nach der Erfindung Kunststoff-Formstücke 21 befestigt, deren Aufbau aus den Fig. 2 bis 5 näher hervorgeht.

Die Formstücke 21 dienen bei dem Regal 10 der Fig. 1 als Auflage für ein - mit gestrichelten Linien angedeutetes - Schranksegment 18 mit zwei Flügeltüren 19, 20, das an den oberen Querverstrebungen 13, 14 mittels der dort vorgesehenen Schrauben 17 befestigt ist und dessen Gewicht auf den beiden Formstücken 21 ruht und von diesen auf die Rohre 15 übertragen wird. Angesichts des Gewichts, das ein solches mit Gegenständen gefülltes Schranksegment 18 haben kann, ist es wichtig, daß die Gewichtskraft von ihm richtig auf die Rohre 15 übertragen wird. Hierzu dienen die Formstücke 21.

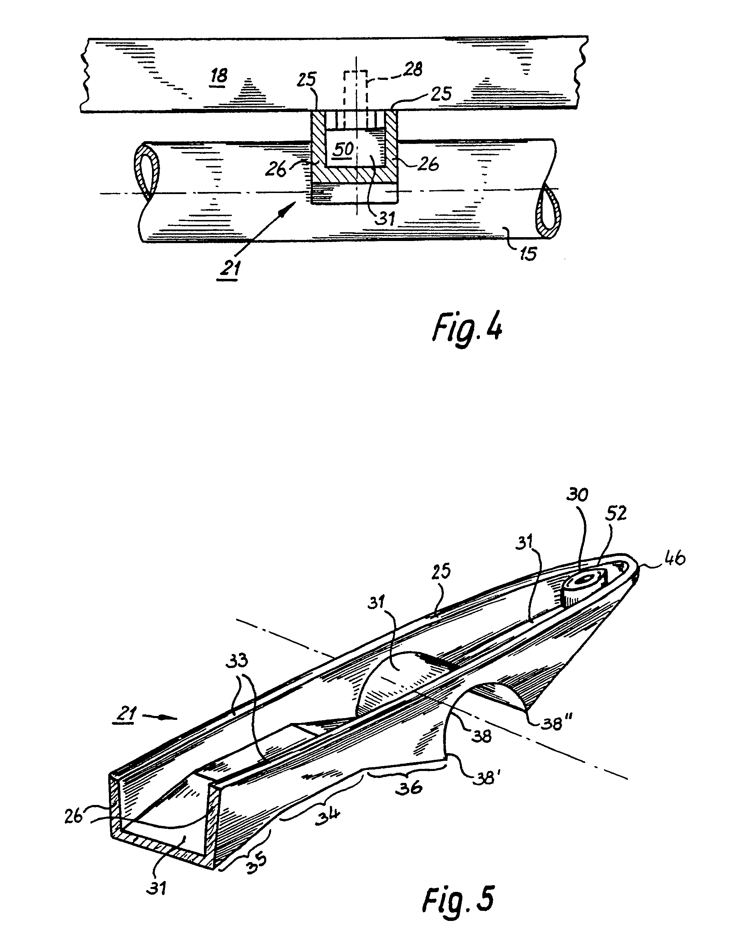

Fig. 2 zeigt ein derartiges Formstück 21 in der Seitenansicht und auf zwei Rohren 15 formschlüssig befestigt, Fig. 3 in der Draufsicht, Fig. 4 im Schnitt und Fig. 5 in raumbildlicher Darstellung.

Wie Fig. 2 zeigt, hat das Formstück 21 eine ebene Auflagefläche 25, die hier z.B. als Auflage für die Unterseite des Schranksegments 18 dient, wobei diese Unterseite durch zwei Stifte 27, 28 gegen seitliches Verschieben gesichert werden kann. Diese Stifte greifen jeweils in eine entsprechende Bohrung des Schrankelements 18 und in eine entsprechende Ausnehmung 29 bzw. 30 des Formstücks 21 ein.

Wie Fig. 5 zeigt, ist das Formstück 21 etwa trogförmig ausgebildet, d.h. es hat eine durchgehende Wand 26, deren oberer Rand die ebene Auflagefläche 25 bildet, und diese Wand ist nach unten abgeschlossen durch einen Boden 31. Das Formstück 21 ist bevorzugt als Spritzgußteil aus einem geeigneten Kunststoff ausgebildet.

Zwischen den beiden Rohren 15 erstreckt sich ein Mittelabschnitt 33 des Formstücks 21, der in einem Mittelbereich 34 seinen geringsten Querschnitt hat und dessen Querschnitt links und rechts vom Bereich 34 in den beiden Bereichen 35 und 36 zunimmt, und zwar bis zu zwei Formhöhlungen 37 bzw. 38, welche jeweils komplementär zum zugeordneten Rohr 15 ausgebildet sind, wie das Fig. 2 klar zeigt. Naturgemäß könnten die Formhöhlungen 37 und 38 auch nur bereichsweise komplementär ausgebildet sein.

Die Mittelebenen der Rohre 15 sind mit 40 und 41 bezeichnet. Die beiden Formhöhlungen 37 und 38 sind nun so ausgebildet, daß sie sich auf den einander zugewandten Seiten der Rohre 15 bis zu einer Stelle 37' bzw. 38' erstrecken, welche unterhalb der Mittelebene 40 bzw. der Mittelebene 41 liegen. (Die beiden Mittelebenen 40 und 41 liegen hier in derselben Ebene). Ferner ist der Abstand der Punkte 37' und 38' größer gewählt als der Abstand a zwischen den beiden Rohren 15, d.h. beim Aufsetzen des Formstücks 21 auf die Rohre 15 rastet das Formstück auf diesen Rohren ein.

Die Formhöhlungen 37, 38 erstrecken sich beim Ausführungsbeispiel jeweils über etwas weniger als 180° des Umfanges der Rohre 15, wobei naturgemäß die Größe dieses Winkels variierbar ist. Sie erstrecken sich jeweils bis zu einer Stelle 37'' bzw. 38''. Von dort aus nimmt der Querschnitt des Formstücks 21 nach außen hin ab bis zu seinem linken Ende 45 bzw. seinem rechten Ende 46, wie das die Zeichnungen klar zeigen.

Das Formstück 21 hat, wie auch aus Fig. 4 klar hervorgeht, ein nach oben offenes U-förmiges Profil mit den beiden Seitenwänden 26 und dem Boden 31, welche eine Formhöhlung 50 begrenzen. Der Materialquerschnitt des Formstücks 21 wird an die zu tragende maximale Last angepaßt.

Zur Bildung der Ausnehmungen 29, 30 ist an beiden Enden des Formstücks 21 je ein Zapfen 51 bzw. 52 vorgesehen, der sich vom Boden 31 nach oben erstreckt und in dem die betreffende Ausnehmung ausgebildet ist. Die Oberseite der Zapfen 51, 52 fluchtet mit der Auflagefläche 25, ist also gleich hoch wie diese.

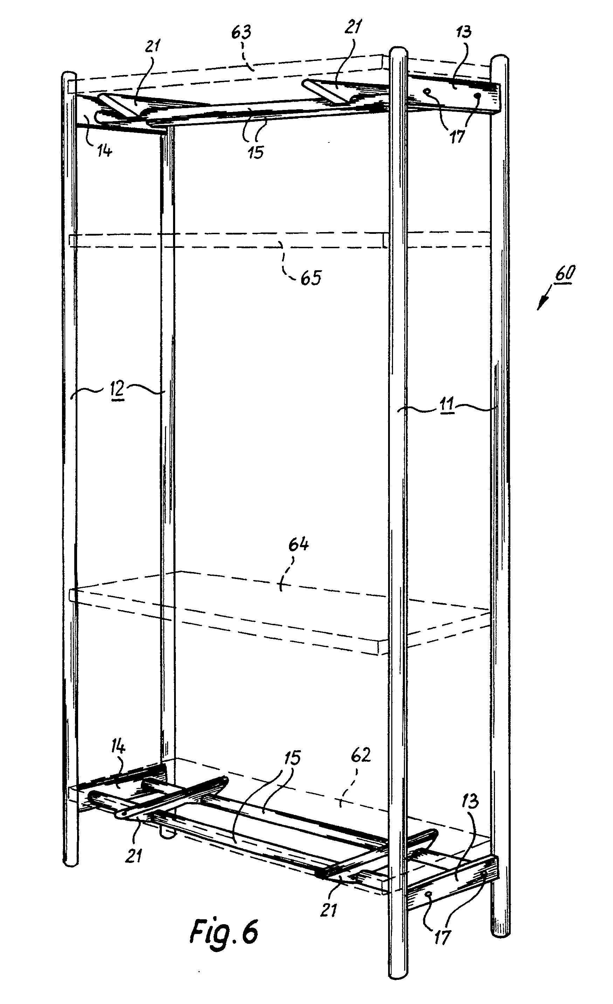

Fig. 6 zeigt ein Regal 60, dessen Stützanordnungen 11 und 12 gleich ausgebildet sind wie bei Fig. 1. Gleiche oder gleichwirkende Teile werden deshalb mit denselben Bezugszeichen bezeichnet wie dort und gewöhnlich nicht nochmals beschrieben.

Auch hier sind an den unteren Querverstrebungen 13, 14 mittels Schrauben 17 zwei parallele Rohre 15 angeschraubt, und ebenso sind an den oberen Querverstrebungen 13, 14 mittels Schrauben 17 zwei parallele Rohre 15 angeschraubt, so daß sich ein in sich stabiles Grundsystem ergibt, das noch durch (nicht dargestellte) rückwärtige Verstrebungen versteift werden kann, wenn Bedarf dazu vorhanden ist.

Sowohl auf den unteren wie auf den oberen Rohren 15 sind je zwei Formstücke 21 im Abstand voneinander angeordnet, die hier beispielsweise als Auflage für ein unteres Regalbrett 62 und ein oberes Regalbrett 63 dienen. Ferner sind an den senkrechten Stützanordnungen 11 und 12 noch zwei weitere Regalbretter 64 und 65 eingehängt.

Dadurch, daß z.B. das Schrankelement 18 nicht direkt auf den Rohren 15 aufliegt, sondern unter Zwischenschaltung von Formstücken 21, ergibt sich eine sehr stabile Anordnung. Die Kräfte, die vom Schrankelement 18 auf das Regal 10 übertragen werden müssen, werden über relativ große Kontaktflächen 25 aufgenommen und auf die Rohre 15 übergeleitet, so daß eine gute Belastbarkeit ohne Verformung erzielt wird, und Klappern wird sicher vermieden. Durch die Stifte 27, 28 wird außerdem eine formschlüssige Verbindung erreicht, die ein seitliches Verschieben verhindert.

Naturgemäß sind im Rahmen der Erfindung zahlreiche Abwandlungen und Modifikationen möglich.

## Patentansprüche

1.  Regalanordnung mit senkrechten Stützanordnungen (11, 12), welche durch in gleicher Höhe befindliche parallele Rohre (15) verbunden sind, dadurch gekennzeichnet, daß auf zwei parallelen Rohren (15) gleicher Höhe mindestens ein Formstück (21) angeordnet ist, welches mit zwei Formhöhlungen (37, 38) versehen ist, die die Rohre von oben her bereichsweise umschließen und dessen Oberseite (25) zur Auflage eines Schrankelements (18) oder eines sonstigen Regalelements (62, 63) ausgebildet ist.

2.  Regalanordnung nach Anspruch 1, dadurch gekennzeichnet, daß sich die Formhöhlungen (37, 38) auf den einander zugewandten Seiten der Rohre (15) bis unter deren Mittelebenen (40, 41) erstrecken.

3.  Regalanordnung nach Anspruch 2, dadurch gekennzeichnet, daß die Formhöhlungen (37, 38) an ihren sich unter die Mittelebene (40, 41) der Rohre (15) erstreckenden Stellen (37', 38') einen Abstand voneinander aufweisen, welcher größer ist als der Abstand (a) der Rohre (15) im Bereich ihrer Mittelebenen (40, 41).

4.  Regalanordnung nach einem oder mehreren der vorhergehenden Ansprüche, dadurch gekennzeichnet, daß die Formhöhlungen (37, 38) mindestens nahezu komplementär zu den Rohren (15) ausgebildet sind.

5. Regalanordnung nach einem oder mehreren der vorhergehenden Ansprüche, dadurch gekennzeichnet, daß das Formstück (21) auf seiner zur Auflage eines Schranksegments (18) oder dergleichen dienenden Oberseite eine im wesentlichen ebene Auflagefläche (25) aufweist.

6. Regalanordnung nach einem oder mehreren der vorhergehenden Ansprüche, dadurch gekennzeichnet, daß das Formstück (21) mindestens bereichsweise im Querschnitt etwa U-förmig ausgebildet ist (Fig. 4, 5).

7. Regalanordnung nach Anspruch 6, dadurch gekennzeichnet, daß das Formstück (21) etwa trogförmig ausgebildet ist (Fig. 5).

8. Regalanordnung nach Anspruch 6 oder 7, dadurch gekennzeichnet, daß das Formstück zwei durch einen Boden (31) verbundene Seitenwände (26) aufweist, wobei die Oberseiten der Seitenwände (26) eine Auflagefläche (25) bilden.

9. Regalanordnung nach Anspruch 8, dadurch gekennzeichnet, daß das Formstück (21) im Bereich seiner Enden (45, 46) jeweils mit einem vom Boden (31) ausgehenden Zapfen (51, 52) versehen ist, in welchem sich jeweils eine Ausnehmung (29, 30) befindet.

10. Regalanordnung nach einem oder mehreren der vorhergehenden Ansprüche, dadurch gekennzeichnet, daß das Formstück (21) aus einem formstabilen Kunststoff ausgebildet ist.

11. Regalanordnung nach einem oder mehreren der vorhergehenden Ansprüche, dadurch gekennzeichnet, daß auf dem mindestens einen Formstück (21) der Regalanordnung (10) ein Schranksegment (18) abgestützt ist (Fig. 1).

**Fig.1**

Fig.2

Fig.3

EP 0 441 306 A2

Fig. 4

Fig. 5

Fig.6